**Europäisches Patentamt**

**European Patent Office**

**Office européen des brevets**

(19)

(11) Veröffentlichungsnummer: **0 136 515**
**B1**

(12)

# EUROPÄISCHE PATENTSCHRIFT

(45) Veröffentlichungstag der Patentschrift:
**25.11.87**

(21) Anmeldenummer: **84110016.7**

(22) Anmeldetag: **22.08.84**

(51) Int. Cl.⁴: **F 01 N 3/28,** B 23 K 1/12

(54) **Metallträgergehäuse für Abgaskatalysatoren mit Zusatzrillen.**

(30) Priorität: **05.09.83 DE 3331969**

(43) Veröffentlichungstag der Anmeldung:
**10.04.85 Patentblatt 85/15**

(45) Bekanntmachung des Hinweises auf die Patenterteilung:
**25.11.87 Patentblatt 87/48**

(84) Benannte Vertragsstaaten:
**AT BE CH DE FR GB IT LI LU NL SE**

(56) Entgegenhaltungen:
**GB-A-2 001 547**
**GB-A-2 040 179**

(73) Patentinhaber: **INTERATOM Gesellschaft mit beschränkter Haftung, Friedrich- Ebert- Strasse, D-5060 Bergisch Gladbach 1 (DE)**

(72) Erfinder: **Cyron, Theodor, Dipl.- Ing., Hüttenfeld 1, D-5060 Bergisch- Gladbach 3 (DE)**

(74) Vertreter: **Mehl, Ernst, Dipl.- Ing., Postfach 22 01 76, D-8000 München 22 (DE)**

**2**

**Beschreibung**

Die vorliegende Erfindung betrifft ein Metallträgergehäuse für Abgaskatalysatoren nach dem Oberbegriff des Hauptanspruchs. Zum Beispiel aus der DE-A-29 24 592 ist es bekannt, solche Metallträgergehäuse aus einem gewellten und einem nicht gewellten Blechband spiralförmig zu wickeln und die Berührungsstellen zwischen den Blechbändern alle oder teilweise zu verlöten. Trotz umfangreicher Versuche erweist es sich nach wie vor als schwierig, haltbare Lötverbindungen herzustellen, da die Metallträgergehäuse später beim Betrieb zur Reinigung von Abgasen hohen mechanischen und thermischen Belastungen ausgesetzt sind.

Die Schwierigkeiten beim Löten solcher Metallträgergehäuse beginnen schon beim Aufbringen des Lots, da genügend Lot gerade in die Nähe der zu verbindenden Berührungsstellen gebracht werden muß und andererseits das teure Lot sparsam verwendet werden soll. Zwar sind verschiedene, im Prinzip durchführbare Methoden zur Belotung bekannt, so aus der DE-A 29 24 592, es bestehen jedoch immer noch Probleme. So verursachen die zwischen den zu lötenden Verbindungsflächen deponierten Lötkörner eine für die vorhandene Lotmasse relativ große Distanz der Verbindungsflächen, so daß eine qualitativ gute Lötverbindung nur entstehen kann, wenn die Verbundflächen sich in der schmelzflüssigen Phase des Lots durch äußere oder innere Bewegungskräfte einander räumlich nähern können, was nicht in allen Fällen, so auch nicht bei spiralig gewickelten Katalysatoren, gegeben ist.

Andererseits wird bei einer nachträglichen Belotung des zusammengewickelten Körpers das Lot nur in die Nähe Verbindungsstellen in die Spalten gebracht, wodurch es erstens beim Aufheizen durch thermische Ausdehnung herausrieseln kann und zweitens in der schmelzflüssigen Phase wegen der typischen aufrechten Stellung des Zylinders und der schlechten Oberflächennetzung der erforderlichen Hochtemperaturwerkstoffe beim Löten herunterläuft, statt eine Verbindung herzustellen.

Aus der DE-A-27 33 640 ist es zwar bekannt, Formschlußverbindungen durch eine Strukturierung von lagenweise gewickelten nicht gewellten und gewellten Blechen herzustellen, jedoch erfordert dies, insbesondere zur Strukturierung der gewellten Bleche einen mechanisch sehr hohen Aufwand und führt nicht zu Verbindungen mit den gleichen Vorteilen wie bei Lötverbindungen.

Aus der DE-A-29 02 779 sind weiterhin verschiedene Strukturen nicht gewellter und gewellter Blechlagen bekannt, welche wiederum zu einer Formschlußverbindung führen sollen, welche die Lötverbindung ersetzt. Hierbei werden z. B. Längsrichtung in mehrere Streifen unterteilte nicht gewellte Blechlagen vorgeschlagen, die jedoch nicht in Zusammenhang mit einer Verbesserung bzw. Erleichterung beim Beloten und Verlöten stehen.

Aufgabe der vorliegenden Erfindung ist die Schaffung eines Metallträgergehäuses für Abgaskatalysatoren, welches sich besser beloten und verlöten läßt. Dabei sollen die übrigen Vorteile der bekannten Ausführungsformen erhalten bleiben.

Zur Lösung dieser Aufgabe wird ein Metallträgergehäuse nach dem Hauptanspruch vorgeschlagen, welche aus einem gewellten und einem nicht gewellten Blechband aufgewickelt ist, wobei das nicht gewellte Blechband eine in Wickelrichtung oder ungefähr in Wickelrichtung verlaufende Struktur aus Rillen oder Nuten aufweist. Solche erfindungsgemäßen Strukturen in dem nicht gewellten Blechband, welche zumindest nahezu in Wickelrichtung verlaufen, verhindern beim Löten das Herunterlaufen von Lot in der schmelzflüssigen Phase. Jeweils an den Strukturen bildet sich dadurch ein Tropfen, so daß zumindest in diesem Bereich eine feste Lötverbindung zustande kommt. Zusätzlich eignen sich diese Strukturen auch zum Ansammeln von größeren Mengen Lot in der Nähe der Berührungsstellen zwischen den Blechbändern, was eine Belotung erheblich vereinfachen kann. Dabei ist davon auszugehen, daß die Struktur der nicht gewellten Blechbänder nur etwa die Größenordnung der Dicke des Blechbandes hat, so daß eine Verringerung des freien Querschnitts der zu bildenden abgasdurchlässigen Zellen von untergeordneter Bedeutung ist.

Im Anspruch 2 wird dementsprechend in weiterer Ausgestaltung der Erfindung vorgeschlagen, daß die in Wickelrichtung verlaufenden Strukturen eine Tiefe aufweisen, die ungefähr der Dicke des nicht gewellten Blechbandes entspricht. Diese Tiefe der Struktur hat auch ungefähr die Größenordnung der zu verwendenden Lötkörner, so daß beim Beloten sich Körner in dieser Struktur verfangen können.

In weiterer Ausgestaltung der Erfindung wird im Anspruch 3 vorgeschlagen, daß die Struktur des nicht gewellten Blechbandes aus etwa gleich breiten, im Wechsel angeordneten flachen Tälern und Zwischenrücken besteht. Dieser zinnenartige Querschnitt ist einfach, beispielsweise beim Wickelvorgang durch entsprechende Vorrichtungen herzustellen und erzielt gerade die gewünschten Wirkungen.

Im Anspruch 4 wird dazu vorgeschlagen, daß die Struktur des nicht gewellten Blechbandes eingedrückt oder eingeprägt ist, wobei ein Eindrücken durch Anpressen des Bandes mit einer elastischen Walze an eine entsprechend vorgeformte Prägewalze erfolgen kann.

In spezieller Ausgestaltung der Erfindung wird im Anspruch 5 vorgeschlagen, daß die Breite der Täler bzw. Zwischenrücken zwischen 3 und 10 mm betragen soll. Diese Größen haben sich als günstig erwiesen, wobei die genaue Dimensionierung natürlich vom Anwendungsfall und der Größe des zu erstellenden Metallträgergehäuses abhängt. Bevorzugt wird bei dem erfindungsgemäßen Metallträgergehäuse, daß alle Berührungsstellen zwischen den beiden Blechbändern verlötet sein sollen, im Gegensatz zu nur an einigen Stellen verbundenen Metallträgergehäusen. Dabei ist zu beachten, daß durch die Struktur des nicht gewellten Bandes die Berührungsstellen anders angeordnet sind als bei bekannten Metallträgergehäusen, wie anhand der Zeichnung noch näher erklärt wird.

Ein Ausführungsbeispiel der Erfindung ist mit seinen erfindungswesentlichen Merkmalen und Eigenschaften schematisch in der Zeichnung dargestellt und zwar zeigen

Fig. 1 den prinzipiellen Aufbau eines erffndungsgemäßen Metallträgergehäuses,

Fig. 2 einen Querschnitt durch das strukturierte, nicht gewellte Band des Metallträgergehäusee und,

Fig. 3 das Verhalten des strukturierten nicht gewellten Bandes beim Zueammenrollen in übertriebener Darstellung.

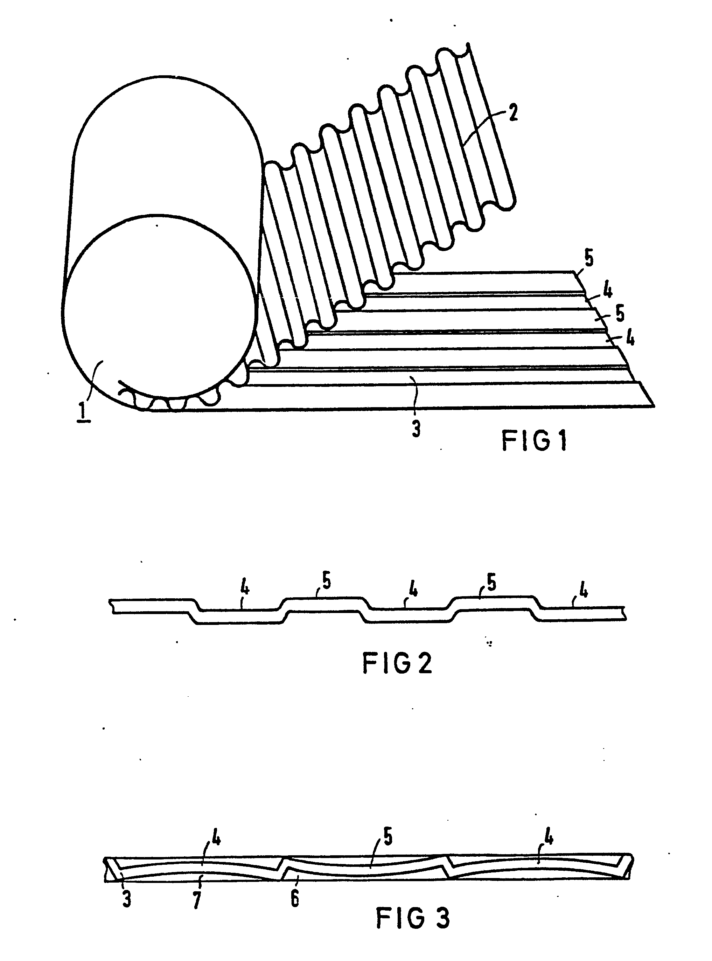

Fig. 1 zeigt zur Veranschaulichung der Struktur des nicht gewellten Blechbandes ein erfindungsgemäßes Metallträgergehäuse 1, welches noch nicht ganz aufgewickelt ist. Es besteht aus einem gewellten Blechband 2 und einem strukturierten, nicht gewellten Blechband 3, welches Täler 4 und Zwischenrücken 5 aufweist. Üblicherweise wird für solche Anwendungen hochtempereturbeständiges Stahlblech verwendet.

In Fig. 2 ist der Ausschnitt eines Querschnitts durch das strukturierte nicht gewellte Blechband 3 gezeigt, wobei wiederum die flachen Täler 4 und die Zwischenrücken 5 erkennbar sind. Die Darstellung ist bezüglich der Dicke des Blechbandes und der Breite der Struktur nicht maßstabgerecht; es wird jedoch veranschaulicht, daß die Tiefe der Struktur jeweils nur die Größenordnung der Dicke des Bleches 3 besitzt.

Da die Blechbänder sehr dünn sind, und folglich auch die Struktur des nicht gewellten Blechbandes nur sehr geringe Tiefe hat, läßt sich auch ein strukturiertes Blechband problemlos aufwickeln. Allerdings geraten die Täler 4 und Zwischenrücken 5 dabei unter Zug- bzw. Druckspannung. In Fig. 3 ist in übertriebener Darstelung gezeigt, wie sich dies auf die Struktur des nicht gewellten Blechbandes beim Aufwickeln auswirkt. Die Täler 4 und die Zwischenrücken 5 wölben sich beim Aufwickeln jeweils von der ihnen benachbarten Schicht weg, so daß an den Stellen, an denen eine Welle des gewellten Blechbandes kreuzt, keine ganz gerade Anlagelinie entsteht. Dies hat wiederum Vorteile beim Beloten und beim Zusammenlaufen des Lots und führt zu vielen festen Lötverbindungspunkten durch Verdoppelung der Lottaschen 6,7.

Mit der beschriebenen Erfindung lassen sich unter Beibehaltung aller Vorteile der bisher bekannten Metallträgergehäuse die Belotungs-und Lötvorgänge vereinfachen und verbessern.

**Patentansprüche**

1. Metallträgergehäuse für Abgaskatalysatoren, bestehend aus spiralförmig aufgewickelten, abwechselnd geschichteten gewellten (2) und nicht gewellten (3) Blechbändern, wobei die beiden Blechbänder an allen oder einem Teil der Berührungsstellen miteinander verlötet sind, <u>dadurch gekennzeichnet,</u> daß das nicht gewellte Blechband (3) eine in Wickelrichtung oder ungefähr in Wickelrichtung verlaufende Struktur aus Rillen (4) oder Nuten aufweist.

2. Metallträgergehäuse für Abgaskatalysatoren nach Anspruch 1, <u>dadurch gekennzeichnet,</u> daß die Struktur (4, 5) des glatten Blechbandes eine Tiefe aufweisen, die ungefähr der Dicke des nicht gewellten Blechbandes (3) entspricht.

3. Metallträgergehäuse für Abgaskatalysatoren nach Anspruch 1 oder 2, <u>dadurch gekennzeichnet,</u> daß die Struktur des nicht gewellten Blechbandes (3) aus etwa gleich breiten, im Wechsel angeordneten flachen Tälern (4) und Zwischenrücken (5) besteht.

4. Metallträgergehäuse für Abgaskatalysatoren nach einem der vorhergehenden Ansprüche, <u>dadurch gekennzeichnet,</u> daß die Struktur (4, 5) des nicht gewellten Blechbandes (3) eingedrückt oder eingeprägt ist.

5. Metallträgergehäuse für Abgaskatalysatoren nach einem der vorhergehenden Ansprüche, <u>dadurch gekennzeichnet,</u> daß die Breite der Täler (4) bzw. Zwischenrücken (5) zwischen 3 und 10 mm beträgt.

**Claims**

1. A metallic carrier housing for exhaust catalysts, consisting of alternate layers of corrugated sheet metal strips (2) and non-corrugated sheet metal strips (3) which are wound in spiral fashion, where the two sheet metal strips are brazed to one another at all of or part of their contact points, <u>characterised in</u> that the non-corrugated sheet metal strip (3) has a structure extending in the direction of winding or approximately in the direction of winding composed of channels (4) or grooves.

2. A metallic carrier housing for exhaust catalysts as claimed in claim 1, <u>characterised in</u> that the structure (4, 5) of the smooth sheet metal strip has a depth which corresponds approximately to the thickness of the non-corrugated sheet metal strip.

3. A metallic carrier housing for exhaust catalysts as claimed in claim 1 or 2, <u>characterised</u>

in that the structure of the non-corrugated sheet metal strip (3) consists of alternating flat troughs (4) and intermediate ridges (5) which are approximately equal in breadth.

4. A metallic carrier housing for exhaust catalysts as claimed in one of the preceding claims, characterised in that the structure (4, 5) of the non-corrugated sheet metal strip (3) is impressed or embossed.

5. A metallic carrier housing for exhaust catalysts as claimed in one of the preceding claims, characterised in that the breadth of the troughs (4) and of the intermediate ridges (5) amounts to between 3 and 10 mm.

**Revendications**

Boîtier de support métallique pour des catalyseurs de gaz d'échappement, constitué par une bande de tôle ondulée (2) et une bande de tôle non ondulée (3), enroulées en spirale et selon des couches alternées, les deux bandes de tôle étant soudées entre elles au niveau de l'ensemble ou d'une partie des zones de contact, caractérisé par le fait que la bande de tôle non ondulée (3) possède une structure, qui s'étend dans la direction de l'enroulement ou approximativement dans cette direction et est formée par des cannelures (4) ou des rainures.

2.Boîtier de support métallique pour catalyseur de gaz d'échappement suivant la revendication 1, caractérisé par le fait que la structure (5) de la bande de tôle lisse possède une profondeur qui correspond approximativement à l'épaisseur de la bande de tôle non ondulée (3).

3. Boîtier de support métallique pour catalyseurs de gaz d'échappement suivant la revendication 1 ou 2, caractérisé par le fait que la structure de la bande de tôle non ondulée (3) est constituée par des parties en creux plates (4) et des dos intercalaires (5), possédant des largeurs approximativement identiques et disposés en alternance.

4. Boîtier de support métallique pour des catalyseurs de gaz d'échappement suivant l'une des revendications précédentes, caractérisé par le fait que la structure (4,5) de la bande de tôle non ondulée (3) est formée par enfoncement ou gaufrage en creux.

5. Boîtier de support métallique pour catalyseurs de gaz d'échappement suivant l'une des revendications précédentes, caractérisé par le fait que la largeur des parties en creux (4) ou des dos intercalaires (5) est comprise entre 3 et 10 mm.

FIG 1

FIG 2

FIG 3